(19) Europäisches Patentamt
European Patent Office
Office européen des brevets

(11) Veröffentlichungsnummer : **0 075 533**
**B1**

(12) # EUROPÄISCHE PATENTSCHRIFT

(45) Veröffentlichungstag der Patentschrift : **07.08.85**

(51) Int. Cl.[4] : **C 08 G 59/40**, C 08 K 5/21

(21) Anmeldenummer : **82810364.8**

(22) Anmeldetag : **03.09.82**

(54) **Heisshärtbare Epoxidharzmassen.**

(30) Priorität : **09.09.81 GB 8127233**
**11.12.81 GB 8137555**

(43) Veröffentlichungstag der Anmeldung : **30.03.83 Patentblatt 83/13**

(45) Bekanntmachung des Hinweises auf die Patenterteilung : **07.08.85 Patentblatt 85/32**

(84) Benannte Vertragsstaaten :
**AT BE CH DE FR GB IT LI NL SE**

(56) Entgegenhaltungen :
**GB-A- 1 293 142**
**US-A- 2 795 610**
**US-A- 3 386 956**

(73) Patentinhaber : **CIBA-GEIGY AG**
**Postfach**
**CH-4002 Basel (CH)**

(72) Erfinder : **Andrews, Christopher Michael**
**12 Hope Street**
**Cambridge CB1 3NA (GB)**

**EP 0 075 533 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Vorliegende Erfindung betrifft heisshärtbare Epoxidharzmassen, ein Verfahren zu deren Härtung sowie dadurch erhaltene gehärtete Produkte.

Es ist bekannt, dass Epoxidharze, d. h. im Durchschnitt mehr als eine 1,2-Epoxidgruppe pro Molekül enthaltende Substanzen, durch Reaktion mit verschiedenen Substanzklassen unter Bildung vernetzter, unschmelzbarer, unlöslicher Produkte mit wertvollen technischen Eigenschaften gehärtet werden können.

Aus US-A-3 386 956 ist die Härtung von Epoxidharzen mittels Harnstoffen der folgenden Formeln

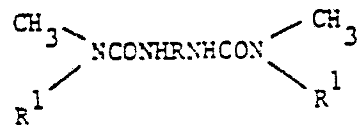

(I)

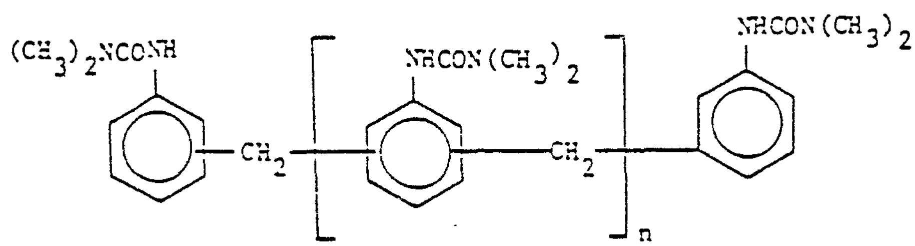

(II)

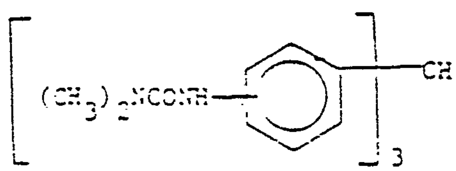

(III)

und

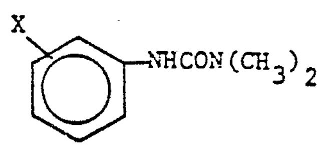

(IV)

bekannt geworden, worin R für einen unter methylsubstituiertem Phenylen, Methylendiphenylen, Dimethoxydiphenylen und Dimethyldiphenylen ausgewählten zweiwertigen Rest, $R^1$ für Methyl oder Hydroxyäthyl, n für eine ganze Zahl von 2 bis 5 und X für $-OCH_3$, $-Cl$, $-H$, $-CH_3$ oder $-NO_2$ stehen.

Ferner offenbart die U.S. Patentschrift, dass die Härtungswirkung dieser Mittel durch Einarbeitung von Dicyandiamid, Stearinsäurehydrazid, Adipinsäuredihydrazid, Succinimid oder Cyanacetamid in die härtbaren Massen gefördert werden kann.

Gemäss jenem Patent überwindet die Verwendung der besagten Harnstoffe eine bei härtbaren Epoxidharzmassen des Standes der Technik auftretende Schwierigkeit, nämlich dass bei Verwendung von Härtern wie Dicyandiamid verhältnismässig hohe Temperaturen und ziemlich lange Härtungszeiten erforderlich sind, während bei Verwendung anderer, reaktionsfähigerer Härter oder Beschleuniger diese zu vorzeitiger Härtung bei Raumtemperatur führen, d. h. diese sind nicht ausreichend latent.

Aus US-A-3 660 316 ist bekannt, dass 1-Cyan-3-niederalkyl-guanidine ebenfalls die Härtung von Epoxidharzen mit Bisharnstoffen der Formel II bis IV fördern.

Harnstoffe der obigen Formeln, insbesondere N-(4-Chlorphenyl)-N',N'-dimethylharnstoff und 2,4-Bis-(N,N-dimethylureido)-toluol wurden industriell zur Härtung von Epoxidharzen eingesetzt, für sich allein oder mit Dicyandiamid als Aktivator sowie als Aktivatoren für die Härtung von Epoxidharzen mit dicyandiamid.

Wegen der immer schärfer werdenden Anforderungen an die Lagerfähigkeit von härtbaren Massen bei Raumtemperatur bei dennoch rascher Härtung bei mässig erhöhten Temperaturen (z. B. 100 °C) besteht jedoch nun ein Bedarf für Ersatzprodukte für die oben erwähnten Harnstoffe.

Es wurde nun gefunden, dass gewisse phenolische Harnstoffe diese schärferen Erfordernisse weitgehend erfüllen.

Gegenstand dieser Erfindung sind demnach heisshärtbare Massen, die aus (a) einem Epoxidharz und (b) einer heisshärtendem Menge eines Harnstoffs der Formel

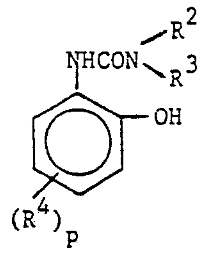

(V)

worin $R^2$ und $R^3$ je für eine gegebenenfalls durch ein Halogenatom (vorzugsweise ein Chloratom) oder eine Hydroxyl- oder Cyangruppe substituierte Alkyl-, Cycloalkyl-, Alkenyl-, Cycloalkenyl- oder Aralkylgruppe stehen, mit der Massgabe, dass $R^2$ auch ein Wasserstoffatom bedeuten kann, oder $R^2$ und $R^3$ zusammen mit dem wie gezeigt daran gebundenen Stickstoffatom einen heterocyclischen Ring mit 3 bis 5 Kohlenstoffatomen und gegebenenfalls einem Sauerstoffatom im Ring bilden $R^4$ $—NH_2$, $—NO_2$, —Cl, —Br oder Alkyl mit 1 bis 10 Kohlenstoffatomen darstellt und p null, 1 oder 2 ist, bestehen.

Ein Vorteil von N-(2-Hydroxyphenyl)-N,N'-dimethylharnstoff und weiteren Harnstoffen der Formel V über N-(4-Chlorphenyl)-N',N'-dimethylharnstoff und 2,4-Bis-(N,N-dimethylureido)-toluol besteht darin, dass sie sich in den gebräuchlicheren Epoxidharzen wie 2,2-Bis-(4-(glycidyloxy)-phenyl)-propan und Bis-(4-(diglycidylamino)-phenyl)-methan beim Erhitzen mit diesen auf Temperaturen bis 90 °C, insbesondere 60° bis 80 °C, unter Bildung stabiler, bei 40 °C in 3 bis 4 Wochen nicht gelierender Lösungen mit mehr als 3 Monaten Lagerfähigkeit bei Raumtemperatur (20° bis 25 °C) auflösen. Bei den zwei oben erwähnten, bisher für diesen Zweck eingesetzten Harnstoffen ist es zur Bildung einer Lösung notwendig, das Epoxidharz auf Temperaturen von 100° bis 120 °C zu erhitzen, was zu vorzeitiger Gelierung des Gemischs führen kann.

In der Formel V stehen $R^2$ und $R^3$ vorzugsweise je für eine Alkylgruppe mit 1 bis 6 Kohlenstoffatomen, eine Hydroxyalkylgruppe mit 2 bis 4 Kohlenstoffatomen, eine Cycloalkylgruppe mit 3 bis 7 kohlenstoffatomen, eine Alkenylgruppe mit 2 bis 4 Kohlenstoffatomen oder eine Aralkylgruppe mit 7 bis 9 Kohlenstoffatomen. Spezielle Beispiele für geeignete Gruppen $R^2$ und $R^3$ sind Methyl, Aethyl, n-Propyl, tert.-Butyl, Cyclohexyl, 4-Methylcyclohexyl, Allyl, 2-Hydroxyäthyl und Benzyl. Besonders bevorzgut werden solche Verbindungen, in denen $R^2$ und $R^3$ je für Methyl oder $R^2$ für Methyl und $R^3$ für 2-Hydroxyäthyl stehen ; diese stellen besonders wirksame Beschleuniger für Dicyandiamid dar. Bedeuten $R^2$ und $R^3$ zusammen mit dem wie gezeigt daran gebundenen Stickstoffatom einen heterocyclischen Ring, so kann dies beispielsweise ein Piperidino-, Morpholino- oder Pyrrolidinoring sein, d. h. $R^2$ und $R^3$ zusammen mit dem Stickstoffatom bedeuten eine Gruppe der Formel

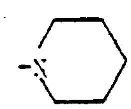

(VI)

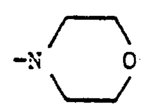

(VII)

oder

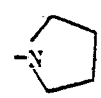

(VIII)

Verbindungen, in denen $R^2$ und $R^3$ beide von Methyl bzw. $R^2$ von Methyl und $R^3$ von 2-Hydroxyäthyl verschieden sind, sind weniger reaktionsfähig mit Epoxidharzen und deshalb als Heisshärter nützlich, z. B. zur Herstellung von Giessteilen, wo das Auftreten einer zu schnellen Härtungswirkung (und die Entwicklung erheblicher Reaktionswärme) schädlich sein können.

Vorzugsweise ist p null, oder 1, wobei $R^4$ dann $—NO_2$, —Cl oder —Br bedeutet, oder 2, wobei $R^4$ dann jeweils eine Methylgruppe bedeutet.

Besonders bevorzugte Verbindungen der Formel V sind N-(2-Hydroxyphenyl)-N',N'-dimethylharnstoff, N-(2-Hydroxy-4-nitrophenyl)-N',N'-dimethylharnstoff, N-(4-Chlor-2-hydroxyphenyl)-N',N'-dimethylharnstoff, N-(5-Chlor-2-hydroxyphenyl)-N',N'-dimethylharnstoff, N-(2-Hydroxy-5-nitrophenyl)-N',N'-dimethylharnstoff, N-(3,5-Dimethyl-2-hydroxyphenyl)-N',N'-dimethylharnstoff, N-(2-Hydroxyphenyl)-N'-methyl-N'-(2-hydroxyäthyl)-harnstoff und N-(4-Chlor-2-hydroxyphenyl)-N'-methyl-N'-(2-hydroxyäthyl)-harnstoff.

Die Massen können eine heisshärtende Menge (b) enthalten, d. h. einen Harnstoff der Formel V als einzigen Härter. Dabei wird man üblicherweise 3 bis 25, vorzugsweise 5 bis 20, Gewichtsteile (b) auf 100 Gewichtsteile Epoxidharz (a) einsetzen.

Hydroxyphenylharnstoffe (b) sind allgemein eine bekannte Verbindungsklasse, und solche der Formel V, worin $R^4$ $—CH_3$ oder $—NO_2$ bedeutet, p null, 1 oder 2 ist sowie $R^2$ und $R^3$ je für eine aliphatische Gruppe mit 1 bis 4 Kohlenstoffatomen (mit der Massgabe, dass eins davon ein Wasserstoffatom sein kann) stehen, wurden in U.S. Patentschrift Nr. 2 795 610 als Fungizide, Protozoizide und Algizide beschrieben. Sie lassen sich durch Erhitzen eines Benzoxazolinons der Formel

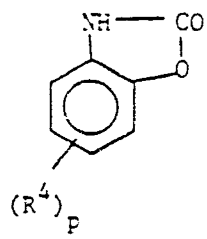

(IX)

mit einem primären oder sekundären Amin der Formel

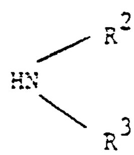

(X)

worin $R^2$, $R^3$, $R^4$ und p die oben angegebenen Bedeutungen haben, wie Methylamin, Dimethylamin, Diäthylamin, N-Methylbenzylamin, Piperidin, Morpholin, Pyrrolidin, Diallylamin, N-Methylcyclohexylamin und N-Methyläthanolamin, nach der in dem U.S. Patent beschriebenen Methode herstellen. Das Benzoxazolinon seinerseits ist in bekannter Weise durch Erhitzen eines entsprechend substituierten o-Aminophenols mit Harnstoff oder durch Nitrierung, Chlorierung oder Bromierung von Benzoxazolinon selbst erhältlich. Will man jedoch eine Verbindung der Formel V, worin $R^4$ eine Aminogruppe bedeutet, einsetzen, so wird diese besser durch Herstellung des entsprechenden nitrosubstituierten Benzoxazolinons und dessen Reduktion hergestellt.

Es wurde ferner gefunden, dass Dicyandiamid, Melamin, Carbonsäurehydrazide sowie gewisse weitere Verbindungen die Heisshärtung von Epoxidharzen mit Harnstoffen der Formel V fördern.

Ein weiterer Gegenstand sind demnach erfindungsgemässe heisshärtbare Massen, die zusätlich (c) eine relativ geringe Gewichtsmenge, bezogen auf das Gewicht von (b), eines unter Dicyandiamid, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten heisshärtungsbeschleunigers enthalten, wobei (b) mit (c) zusammen eine heisshärtende Menge für (a) ausmachen und typischerweise sich zusammen auf 5 bis 25 Gewichtsteile pro 100 Gewichtsteile Epoxidharz (a) belaufen.

Es wurde ferner gefunden, dass Harnstoffe der Formel V die Heisshärtung von Epoxidharzen mit Dicyandiamid, Melamin, Carbonsäurehydraziden und gewissen anderen Verbindungen beschleunigen.

Ein weiterer Gegenstand sind demnach erfindungsgemässe heisshärtbare Massen, die zusätzlich (d) eine relativ grosse Menge, bezogen auf das Gewicht von (b), eines unter Dicyandiamid, Melamin, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärterts für Epoxidharze enthalten, wobei (d) mit (b) zusammen eine heisshärtende Menge für (a) ausmachen und typischerweise sich zusammen auf 5 bis 25 Gewichtsteile pro 100 Gewichtsteile Epoxidharz (a) belaufen.

In diesen Massen einsetzbare Epoxidharze sind vorzugsweise solche mit mindestens zwei direkt an ein Sauerstoff-, Stickstoff- oder Schwefelatom bzw. -atome gebundenen Gruppen der Formel

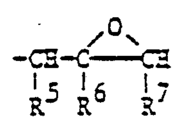

(XI)

worin entweder $R^5$ und $R^7$ je ein Wasserstoffatom darstellen, wobei $R^6$ dann ein Wasserstoffatom oder eine Methylgruppe bedeutet, oder $R^5$ und $R^7$ zusammen $-CH_2CH_2-$ darstellen, wobei $R^6$ dann ein Wasserstoffatom bedeutet.

Als Beispiele solcher Harze seien Polyglycidyl- und Poly-(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z. B. Oxalsäre, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren wie Tetrahydrophthalsäure, 4-Methyltetrahydrophthalsäure, Hexahydrophthalsäure und 4-Methylhexahydrophthalsäure sowie von aromatischen Polycarbonsäuren wie Phthalsäure, Isophthalsäure und Terephthalsäure ableiten.

Weitere Beispiele sind Polyglycidyl- und Poly-(β-methylglycidyl)-äther, die durch Umsetzung einer mindestens zwei freie alkoholische und/oder phenolische Hydroxylgruppen pro Molekül enthaltenden

Verbindung mit dem entsprechenden Epichlorhydrin unter alkalischen Bedingungen, oder auch in Gegenwart eines sauren Katalysators mit nachfolgender Alkalibehandlung, erhältlich sind. Diese Aether lassen sich aus acyclischen Alkoholen wie Aethylenglykol, Diäthylenglykol und höheren Poly-(oxyäthylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)-3-cyclohexen, und aus Alkoholen mit aromatischen Kernen wie N,N-Bis-(2-hydroxyäthyl)-anilin und p,p'-Bis-(2-hydroxyäthylamino)-diphenylmethan herstellen. Man kann sie ferner aus einkernigen Phenolen, wie Resorcin und Hydrochinon, und mehrkernigen Phenolen wie Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-äthan, 2,2-Bis-(4-hydroxyphenyl)-propan und 2,2-Bis-(3,5-dibrom-4-hydroxyphenyl)-propan sowie aus Aldehyden wie Formaldehyd, Acetaldehyd, Chloral und Furfurol mit Phenolen wie Phenol selbst und durch Chloratome oder Alkylgruppen mit jeweils bis zu 9 Kohlenstoffatomen ringsubstituiertem Phenol wie 4-Chlorphenol, 2-Methylphenol und 4-tert.-Butylphenol gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen wie Anilin, n-Butylamin, Bis-(4-aminophenyl)-methan, m-Xylylendiamin und Bis-(4-methylaminophenyl)-methan erhalten werden, Triglycidylisocyanurat sowie N,N'-Diglycidylderivate von cyclischen Alkylenharnstoffen wie Aethylenharnstoff und 1,3-Propylenharnstoff, und Hydantoinen wie 5,5-Dimethylhydantoin.

Poly-(S-glycidyl)-verbindungen sind zum Beispiel die Di-S-glycidylderivate von Dithiolen wie Aethan-1,2-dithiol und Bis-(4-mercaptomethylphenyl)-äther.

Beispiele für Epoxidharze mit Gruppen der Formel XI, worin $R^5$ und $R^7$ zusammen eine $—CH_2CH_2$-Gruppe bedeuten, sind Bis-(2,3-epoxycyclopentyl)-äther, 2,3-Epoxyclopentyl-glycidyläther und 1,2-Bis-(2,3-epoxycyclopentyloxy)-äthan.

In Betracht kommen auch Epoxidharze, in welchen die 1,2-Epoxidgruppen an Heteroatome verschiedener Art gebunden sind, beispielsweise das N,N,O-Triglycidylderivat des 4-Aminophenols, der Glycidyläther/Glycidylester der Salicylsäure, N-Glycidyl-N'-(2-glycidyloxypropyl)-5,5-dimethylhydantoin und 2-Glycidyloxy-1,3-bis-(5,5-dimethyl-1-glycidylhydantoin-3-yl)-propan.

Gewünschtenfalls kann ein Gemisch aus Epoxidharzen verwendet werden.

Bevorzugte Epoxidharze sind Polyglycidyläther, Polyglycidylester, N,N'-Diglycidylhydantoine und Poly-(N-glycidyl)-derivate aromatischer Amine. Speziell bevorzugte Harze sind die Polyglycidyläther von 2,2-Bis-(4-hydroxyphenyl)-propan, Bis-(4-hydroxyphenyl)-methan oder einem aus Formaldehyd und Phenol oder durch ein Chloratom oder eine Alkylkohlenwasserstoffgruppe mit 1 bis 9 Kohlenstoffatomen ringsubstituiertem Phenol gebildeten Novolak mit einem 1,2-Epoxidgehalt von mindestens 0,5 Aequivalent pro Kilogramm, Bis-(4-(diglycidylamino)-phenyl)-methan und p-(Diglycidylamino)-phenyl-glycidyläther.

Stellt der Beschleuniger (c) oder der Haupthärter (d) ein Carbonsäurehydrazid dar, so ist dies vorzugsweise Stearinsäurehydrazid, Oxalsäuredihydrazid, Adipinsäuredihydrazid, Sebacinsäuredihydrazid oder Isophthalsäuredihydrazid.

Bei einem 1-Cyan-3-niederalkylguanidin als Beschleuniger (c) oder Haupthärter (d) handelt es sich vorzugsweise um die 3-Methyl-, 3,3-Dimethyl- oder 3,3-Diäthylverbindung.

Mit einem Imidazol als Beschleuniger (c) oder Haupthärter (d) kommen vorzugsweise 2-Phenylimidazol, N-Methylimidazol oder 2-Aethyl-4-methylimidazol in Betracht.

Liegt als Beschleuniger (c) oder Haupthärter (d) ein Carbonsäuresalz eines tertiären Amins vor, ist dies vorzugsweise das Salz einer Hydroxycarbonsäure, wie Milchsäure oder Salicylsäure, mit einer Mannichbase wie 2,4,6-Tris-(dimethylaminomethyl)-phenol.

Ueblicherweise wird der Beschleuniger (c) in einem Anteil von 10 bis 50 Gewichtsteilen auf 100 Gewichtsteile des Harnstoffs (b) bzw. der Harnstoff (b) bei Verwendung als Beschleuniger für den Härter (d) in einem Anteil von 25 bis 75 Gewichtsteilen auf 100 Gewichtsteile (d) vorliegen.

Die neuen Massen können ferner geeignete Weichmacher wie Dibutylphthalat und dioctylphthalat, inerte Verdünnungsmittel wie Teere und Bitumen sowie sogenannte reaktionsfähige Verdünnungsmittel, insbesondere Monoepoxide wie n-Butylglycidyläther, Isooctylglycidyläther, Phenylglycidyläther, Kresylglycidyläther, Glycidylester tertiärer aliphatischer Monocarbonsäuregemische, glycidylacrylat und Glycidylmethacrylat enthalten. Ferner können darin Zusatzstoffe wie Füllstoffe, Verstärkungsstoffe, polymere Schlagfestmacher wie Polyäthersulfone, Phenoxyharze und Butadien/Acrylnitrilkautschuk, Farbmittel, Verlaufmittel, Flammhemmstoffe und Entformungsmittel vorliegen. Beispiele für geeignete Streckmittel, Füllstoffe und Verstärkungsstoffe sind Glasfasern, Kohlenstoffasern, aromatische Polyamidfasern, Glaskügelchen, Glimmer, Quarzmehl, Calciumcarbonat, Cellulose, Kaolin, Wollastonit, kolloidale Kieselsäure grosser spezifischer Oberfläche, gepulverts Polyvinylchlorid sowie gepulverte Polyolefinkohlenwasserstoffe wie Polyäthylen und Polypropylen.

Die erfindungsgemässen härtbaren Massen lassen sich als Laminier-, Tränk- und Giessharze, Pulverbeschichtungen, Formmassen, Kitte und Dichtungsmassen, Einbettungs- und Isoliermassen für die Elektrotechnik, aber insbesondere als Klebstoffe und Grundierung für Klebstoffe verwenden.

Die erfindungsgemässen Massen werden vorzugsweise dadurch gehärtet, dass man sie auf eine Temperatur im Bereich 100 °C bis 180 °C, insbesondere 100° bis 130 °C, erhitzt. Ueblicherweise genügen 30 bis 120 Minuten Erhitzen zur Aushärtung.

Die nachfolgenden Beispiele erläutern die Erfindung. Teile sind dabei Gewichtsteile.

Die in diesen Beispielen verwendeten Harnstoffe werden wie folgt hergestellt :

N-(2-Hydroxyphenyl)-N,N'-dimethylharnstoff

Man verrührt Benzoxazolinon (200 g) 48 Stunden lang bei 50 °C mit 1 Liter 33 %iger Dimethylaminlösung in technischem Alkohol. Der Alkohol und unverändertes Dimethylamin werden bei vermindertem Druck unterhalb 60 °C abdestilliert und das Produkt aus einem Gemisch aus Isopropanol und Petroläther (Siedepunkt 60°-80 °C) im Volumenverhältnis 1 : 1 umkristallisiert. Es schmilzt bei 148 °C (Zers.), auf dem Koflertisch bestimmt.

N-(2-Hydroxy-4-nitrophenyl)-N,N'-dimethylharnstoff

Man gibt Benzoxazolinon (25 g) portionsweise mit einer solchen Geschwindigkeit zu 50 °C heisser konzentrierter Salpetersäure (120 ml), dass eine Temperatur von circa 50 °C aufrechterhalten bleibt. Nach beendeter Zugabe rührt man 20 Minuten bei 50 °C und giesst dann in Wasser (1 Liter). Das abgeschiedene 6-Nitrobenzoxazolinon wird abfiltriert, mit Wasser gewaschen und dann bei 100 °C unter vermindertem Druck (19,5 mbar) getrocknet. Sein Schmelzpunkt ist 248 °C.

Wie oben für Benzoxazolinon beschrieben wird das 6-Nitrobenzoxazolinon unter Verwendung von 267 g des Nitroanalogen in den Harnstoff überführt.

N-(5-Chlor-2-hydroxyphenyl)-N,N'-dimethylharnstoff

Harnstoff (1,67 Mol) und 2-Amino-4-chlorphenol (1 Mol) werden 2 Stunden unter Stickstoff bei 180 °C zusammen erhitzt. Dann kühlt man die Schmelze auf 100 °C ab, versetzt vorsichtig mit 200 ml n-HCl, filtriert das 5-Chlorbenzoxazolinon ab, wäscht es mit Wasser und trocknet bei 100 °C unter vermindertem Druck (19,5 mbar). Nach Umkristallisation aus Wasser beträgt sein Schmelzpunkt 185 °C. Dieses Benzoxazolinon (263 g) wird wie oben beschrieben durch Erhitzen mit alkoholischem Dimethylamin in den gewünschten Harnstoff überführt. Nach Umkristallisation aus einem Gemisch aus Isopropanol und Petroläther (Siedepunkt 60°-80 °C) im Volumenverhältnis 1 : 1 weist der Harnstoff einen Schmelzpunkt von 164 °C auf.

N-(2-Hydroxy-5-nitrophenyl)-N,N'-dimethylharnstoff

Dieser wird in ähnlicher Weise wie das 5-Chlor-2-hydroxyphenylanalog hergestellt, indem man 2-Amino-4-nitrophenol und Harnstoff unter Bildung von 5-Nitrobenzooxazolinon (Schmelzpunkt 215 °C nach Umkristallisation aus Aceton) zusammenschmilzt und dann wie oben mit alkoholischem Dimethylamin erhitzt ; das Produkt wurde nicht umkristallisiert.

N-(3,5-Dimethyl-2-hydroxyphenyl)-N,N'-dimethylharnstoff

Dieser wird auf ähnliche Weise wie das 5-Chlor-2-hydroxyphenylanalog aus 2-Amino-4,6-dimethylphenol, Harnstoff und Dimethylamin hergestellt. Das Benzoxazolinonzwischenprodukt wurde nicht umkristallisiert. Der aus dem alkoholischen Reaktionsmedium auskristallisierende Harnstoff besitzt einen Schmelzpunkt von 140 °C (Zers.).

N-(4-Chlor-2-hydroxyphenyl)-N,N'-dimethylharnstoff

Durch Chlorierung in Essigsäure führt man Benzoxazolinon in sein 6-Chlorderivat über und behandelt dieses dann wie oben mit Dimethylamin in technischem Alkohol. Der Schmelzpunkt des Harnstoffs beträgt 178 °C (Zers.)

N-(2-Hydroxyphenyl)-N,N'-diäthylharnstoff

Man verrührt Benzoxazolinon (1 Mol) 48 Stunden lang bei 50 °C mit 2 Mol Diäthylamin (in technischem Alkohol gelöst) und destilliert dann den Alkohol und überschüssiges Diäthylamin bei vermindertem Druck unterhalb 60 °C ab. Der Rückstand wird in Aceton aufgenommen, und das gewünschte Produkt wird durch Wasserszugabe ausgefällt und dann abfiltriert und bei 80 °C unter verminertem Druck getrocknet.

N-(2-Hydroxyphenyl)-N,N'-pentamethylenharnstoff

Man verrührt Benzoxazolinon (1 Mol) 48 Stunden lang bei 50 °C mit 2 Mol in Methanol gelöstem Piperidin. Beim teilweisen Abdampfen des Lösungsmittels und Kühlen scheidet sich das Produkt aus, das direkt weiterverwendet wird.

N-(2-Hydroxyphenyl)-N'-methylharnstoff

Man verrührt Benzoxazolinon (1 Mol) 48 Stunden lang bei 50 °C mit 2 Mol Methylamin (25 %ige wässrige Lösung) und destilliert dann einen Teil des Wassers und überschüssiges Methylamin bei 60 °C unter vermindertem Druck ab. Beim Abkühlen kristallisiert der gewünschte Harnstoff aus ; er weist einen Schmelzpunkt von 130 °C (Zers.) auf.

N-(2-Hydroxyphenyl)-N'-methyl-N'-(2-hydroxyäthyl)-harnstoff

Man erhitzt Benzoxazolinon (202 g) und N-Methyläthanolamin (133 g) 3 Stunden lang unter Rühren auf 75 °C, kühlt dann auf 65 °C ab und versetzt mit Methanol (50 ml). Man kühlt auf Raumtemperatur ab und gibt Diäthyläther (750 ml) dazu. Der Niederschlag wird abfiltriert und aus Methanol umkristallisiert, was den gewünschten Harnstoff mit einem Schmelzpunkt von 128 °C (Zers.) ergibt.

N-(4-Chlor-2-hydroxyphenyl)-N'-methyl-N'-(2-hydroxyäthyl)-harnstoff

Man erhitzt 6-Chlorbenzoxazolinon (20 g) und N-Methyläthanolamin (17,7 g) in Methanol (40 ml) unter Rühren 3 Stunden lang auf 65 °C. Das Gemisch wird auf Raumtemperatur abgekühlt und filtriert, und der Rückstand wird mit Diäthyläther gewaschen, was den gewünschten Harnstoff mit Schmelzpunkt 178 °C (Zers.) ergibt.

N-(4-Brom-2-hydroxyphenyl)-N,N'-dimethylharnstoff

Man löst Benzoxazolinon (45 g) in 50 °C warmem Chloroform (400 ml) und versetzt tropfenweise mit Brom (26,63 g). Man lässt 16 Stunden bei Raumtemperatur stehen und filtriert die Kristalle aus 6-Brombenzoxazolinon (Schmelzpunkt 172 °C) ab.

Man verrührt 6-Brombenzoxazolinon (35,1 g) 2 1/2 Stunden lang bei 60 °C mit 55 ml 38 %iger Dimethylaminlösung in Methanol. Man kühlt ab, filtriert und wäscht den Nierderschlag mit kaltem Methanol, was den gewünschten Harnstoff (17,9 g), Schmelzpunkt 178 °C (Zers.), ergibt.

« Epoxidharz I » bezeichnet einen Polyglycidyläther des 2,2-Bis-(4-hydroxyphenyl)-propans mit einem 1,2-Epoxidgehalt von 5,16 val/kg und einer Viskosität von 24,5 Pa.s bei 21 °C.

« Epoxidharz II » bezeichnet Bis-(4-diglycidylamino-phenyl)-methan mit einem 1,2-Epoxidgehalt von 8,0 val/kg.

Der Beschleunigungseffekt wird wie bei dieser Technik üblich durch die Abnahme der zur Gelierung der Masser erforderlichen Zeit vor der Härtung ausgedrückt. Falls nicht anders angegeben, werden die Gelierungszeiten dadurch bestimmt, dass man ungefähr 0,1 g des Gemischs auf einen auf die angegebene Temperatur erhitzten Metallblock aufbringt und die zur Gelierung erforderliche Zeit beobachtet.

## Beispiel 1

Dieses Beispiel zeigt den Härtungseffekt, ausgedrückt als die Gelierungszeit (Minuten, falls nicht anders angegeben), von durch Walzenmischung bei Raumtemperatur in verschiedenen Konzentration eingearbeitetem N-(2-Hydroxyphenyl)-N,N'-dimethylharnstoff auf Epoxidhars I bei verschiedenen Temperaturen.

| Gelierungs- | Teile auf 100 Teile Epoxidharz I | | | | | |
|---|---|---|---|---|---|---|
| zeit bei | 5 | 7 | 10 | 13 | 16 | 20 |
| 120°C | 40 | 25 | 17,5 | 12,5 | 9,5 | 9,5 |
| 100°C | > 120 | 120 | 75 | 65 | 50 | 35 |
| 80°C | > 240 | >240 | >240 | >240 | >240 | >240 |
| 40°C | 8 Wochen | 6 Wochen | 4 Wochen | 25 Tage | 21 Tage | 18 Tage |

## Beispiel 2

Man gibt N-(2-Hydroxyphenyl)-N',N'-dimethylharnstoff in verschiedenen Anteilen zu auf 70°-80 °C erhitztem Epoxidharz II. Dabei löst er sich leicht auf. Die Gelierungszeiten (Minuten, falls nicht anders angegeben) bei verschiedenen Temperaturen des Gemischs sind :

| Gelierungs-zeit bei | Teile auf 100 Teile Epoxidharz II | | |
|---|---|---|---|
| | 2 1/2 | 5 | 10 |
| 150°C | 8 1/2 | 3 | 1 1/2 |
| 130°C | 20 | 7 | 2 1/2 |
| 110°C | - | 30 | - |
| 100°C | 180 | 68 | 28 1/2 |
| 90°C | - | etwa 2 Stunden | - |
| 80°C | - | über 12 Stunden | - |

— bedeutet nicht geprüft

Beispiel 3

In diesem Beispiel wird eine erfindungsgemässe Masse heissgehärtet und zur Bildung einer Klebverbindung verwendet.

1,63 mm dicke, unter der Bezeichnung « 2L 73 Alclad » erhältliche Aluminiumlegierungsfolien werden entfettet, gemäss British Ministry of Aviation Aircraft Process Specification [Flugzeugarbeitsvorschrift des britischen Luftfahrtministeriums] DTD-915 B gebeizt, in fliessendem Wasser gewaschen und getrocknet (« Alclad » ist eine eingetragenes Warenzeichen). Ein Gemisch aus 100 Teilen Epoxidharz I, 13 Teilen N-(2-Hydroxyphenyl)-N'N'-dimethylharnstoff, 2,5 Teilen (200 mesh, British Standard 410 [DIN Nr. 80] passierendem) Aluminiumpulver und 0,5 Teilen. im Handel erhältlichem, asbesthaltigem Thixotropiemittel wird mittels eines Dreiwalzenmischers bereitet und zur Herstellung von 2,54 cm × 1,27 cm grossen einfach überlappten Klebfugen verwendet, wobei das Gemisch durch 1 stündiges Erhitzen auf 120 °C gehärtet wird. Die Scherfestigkeit des Verbunds beträgt 25 MPa.

Beispiel 4

Die folgenden Gemische werden mittels eines Dreiwalzenmischers hergestellt, wobei die Zahlen Teile bedeuten :

| | A | B | C | D | E | F | G | H |
|---|---|---|---|---|---|---|---|---|
| Epoxidharz I | 100 | 100 | 100 | 100 | 100 | 100 | 100 | 100 |
| N-(2-Hydroxyphenyl)-N',N'-dimethylharnstoff | 13 | 0 | 0 | 0 | 0 | 0 | 0 | 0 |
| N-(2-Hydroxy-4-nitro-phenyl)-N',N'-dimethyl-harnstoff | 0 | 17 | 0 | 0 | 0 | 0 | 0 | 0 |
| N-(5-Chlor-2-hydroxyphenyl)-N',N'-dimethylharnstoff | 0 | 0 | 15,5 | 0 | 0 | 0 | 0 | 0 |
| N-(2-Hydroxy-5-nitro-phenyl)-N',N'-dimethyl-harnstoff | 0 | 0 | 0 | 17 | 0 | 0 | 0 | 0 |
| N-(3,5-Dimethyl-2-hydroxy-phenyl)-N',N'-dimethyl-harnstoff | 0 | 0 | 0 | 0 | 15 | 0 | 0 | 0 |
| N-(4-Chlor-2-hydroxy-phenyl)-N',N'-dimethyl-harnstoff | 0 | 0 | 0 | 0 | 0 | 15,5 | 0 | 0 |

Der Anteil des Harnstoffs wird jeweils so gewählt, dass er einer äquivalenten Menge Dimethylamin entspricht, da angenommen wird (obwohl die Nützlichkeit dieser Erfindung nicht von der Richtigkeit dieser Annahme abhängt), dass die in den erfindungsgemässen Massen eingesetzten Harnstoffe ihre Wirkung durch Zersetzung beim Erhitzen unter Freisetzung von mit dem Eposidharz reagierendem Dimethylamin (wenn $R^2$ und $R^3$ beide für Methyl stehen) bzw. einem entsprechenden sekundären Amin (wenn $R^2$ und $R^3$ nicht beide für Methyl stehen) ausüben.

Die Gelierungszeiten dieser Gemische bei verschiedenen Temperaturen sind (Zeit in Minuten, falls nicht anders angegeben)

| | A | B | C | D | E | F |
|---|---|---|---|---|---|---|
| 120 °C | 12,5 | 20 | 13 | 8 | 16 | 14 |
| 100 °C | 65 | 105 | 47 | 17 | 75 | 65 |
| 80 °C | 330 | 330 | - | - | - | - |
| 40 °C | 25 Tage | 14 Tage | - | - | 10 Tage | >14 Tage |
| 25 °C | - | - | - | 30 Tage | - | - |

— bedeutet nicht geprüft.

## Beispiel 5

In diesem Beispiel wird die Formbeständigkeit einer mit einem Harnstoff der Formel V erhaltenen, gehärteten Epoxidharzmasse in der Wärme mit derjenigen einer analogen, mit einem vorbekannten Harnstoff als Härter erhaltenen Masse verglichen. Der Begriff « Martens-Wert » bedeutet dabei ein nach einer Modifikation der DIN-Methode erhaltenen Wert, für den ein kleineres Probestück, nämlich 76 mm × 19 mm × 3,2 mm (verglichen mit einer Probengrösse von 120 mm × 15 mm × 10 mm, wir in der DIN-Methode angegeben) und eine maximale Faserlast von 1 225 kPa (verglichen mit den in DIN vorgeschriebenen 4 900 kPa) angewandt werden. Nach dieser modifizierten Methode erhaltene Ergebnisse sind zwar nur Näherungswerte gegenüber den nach der DIN-Methode erhaltenen, doch liefern sie miteinander vergleichbare Ergebnisse.

Durch Erhitzen auf 60 °C stellt man eine Lösung von N-(2-Hydroxyphenyl)-N',N'-dimethylharnstoff (1 g) in 10 g Epoxidharz I her, giesst eine Probe und härtet diese durch 2 Stunden Erhitzen bei 100 °C und danach 1 Stunde bei 150 °C. Der « Martens-Wert » der gehärteten Probe ist 110 °C.

## Beispiel 6

Dieses Beispiel erläutert die durch Dicyandiamid bewirkte Beschleunigung der Härtung eines Epoxidharzes mittels Harnstoffen der Formel V.

Die nachfolgenden Massen werden im Dreiwalzenmischer hergestellt, wobei die Zahlen Teile bedeuten. Es ist ersichtlich, dass die Einarbeitung von Dicyandiamid zu einer Abnahme der Gelierungszeit ohne Beeinträchtigung der Lagerfähigkeit führt.

| | I | J |
|---|---|---|
| Epoxidharz I | 100 | 100 |
| N-(2-Hydroxyphenyl)-N',N'-dimethylharnstoff | 13 | 13 |
| Thixotropiemittel * | 5 | 5 |
| Dicyandiamid | 0 | 2 |
| Gelierungszeit bei 120 °C (Minuten) | 12 1/2 | 9 |
| Lagerfähigkeit bei 40 °C | 3 1/2 Wochen | 3 1/2 Wochen |

* ein handelsübliches Produkt auf Asbestgrundlage.

## Beispiel 7

Dieses Beispiel erläutert die durch einen Harnstoff der Formel V bewirkte Beschleunigung der Härtung eines Epoxidharzes mittels Dicyandiamid und zeigt, dass jener wirksamer als ein Harnstoff des Standes der Technik ist.

Die nachfolgenden Massen werden im Dreiwalzenstuhl hergestellt, wobei die Zahlen Teile bedeuten :

| | | N |
|---|---|---|
| Epoxidharz I | | 100 |
| Thixotropiemittel : | Kieselsäureaerogel | 5 |
| | Glycerin | 1 |

| | |
|---|---|
| Dicyandiamid | 7 |
| N-(2-Hydroxyphenyl)-N',N'-dimethylharnstoff | 4 |
| Gelierungszeit bei 120 °C (Minuten) | 14 |

Beispiel 8

Eine durch Vermischen im Dreiwalzenstuhl hergestellte Masse aus 100 Teilen Epoxidharz I, 16 Teilen N-(2)Hydroxyphenyl)-N',N'-pentamethylenharnstoff und 5 Teilen des in Beispiel 6 verwendeten Thixotropiemittels geliert bei 120 °C in 38 Minuten.

Beispiel 9

Ein Aliquot einer wie in Beispiel 8 hergestellten, jedoch 14,4 Teile N-(2-Hydroxyphenyl)-N',N'-diäthylharnstoff enthaltenden Masse ist nach 2 Stunden Erhitzen bei 90 °C nicht geliert, doch geliert ein weiteres, bei 120 °C erhitztes Aliquot in 67 Minuten.

Beispiel 10

Ein Aliquot einer wie in Beispiel 8 hergestellten, jedoch 12 Teile N-(2-Hydroxyphenyl)-N'-methylharnstoff enthaltenden Masse ist nach 3 1/2 Stunden Erhitzen bei 120 °C nicht geliert, doch geliert ein weiteres, bei 170 °C erhitztes Aliquot in 16 Minuten.

Beispiel 11

Eine durch Vermischen im Dreiwalzenstuhl hergestellte Masse aus 100 Teilen Epoxidharz I, 25 Teilen N-(2-Hydroxyphenyl)-N'-methyl-N'-(2)hydroxyäthyl)-harnstoff und 5 Teilen des in Beispiel 6 verwendeten Thixotropiemittels geliert bei 120 °C in 15 1/2 Minuten und besitzt eine Lagerfähigkeit von 21 Tagen bei 40 °C.

Beispiel 12

Man verfährt wie in Beispiel 11, jedoch unter Ersatz des dort verwendeten Harnstoffs durch 25 Teile N-(4-Chlor-2-hydroxyphenyl)-N'-methyl-N'-(2-hydroxyäthyl)-harnstoff. Das Gemisch geliert nach 24 Minuten bei 120 °C und nach 110 Minuten bei 100 °C. Es besitzt eine Lagerfähigkeit von 40 Tagen bei 40 °C.

Beispiel 13

Man verfährt wie in Beispiel 11, jedoch unter Ersatz des dort verwendeten Harnstoffs durch 18,5 Teile N-(4-Brom-2-hydroxyphenyl)-N',N'-dimethylharnstoff. Das Gemisch geliert nach 15 Minuten bei 120 °C sowie nach 66 Minuten bei 100 °C. Es besitzt eine Lagerfähigkeit von 40 Tagen bei 40 °C.

Beispiel 14

Epoxidharz I (100 Teile), N-(2-Hydroxyphenyl)-N',N'-dimethylharnstoff (10 Teile), 2 Teile des in Beispiel 6 verwendeten Thixotropiemittels und die angegebene Menge Beschleuniger werden im Dreiwalzenstuhl vermengt. Die Gelierungszeiten werden bestimmt, indem man eine 1 g-Probe in ein im Oelbad auf 120 °C erhitztes Reagenzglas gibt und den Beginn der Gelierung manuell feststellt. Einzelheiten des Beschleunigers und die Gelierungszeiten sind in der nachfolgenden Tabelle angegeben :

| Beschleuniger | | Gelierungszeit bei 120 °C (Minuten) |
|---|---|---|
| Typ | Teile | |
| ohne | - | 10 |
| Adipinsäuredihydrazid | 4,0 | 6 |
| Isophthalsäuredihydrazid | 4,0 | 7 |

**Patentansprüche**

1. Heisshärtbare Massen, dadurch gekennzeichnet, dass sie aus
a) einem Epoxidharz und
b) einer heisshärtenden Menge eines Harnstoffs der Formel

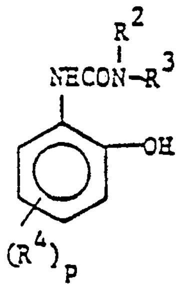

(V)

worin $R^2$ und $R^3$ je für eine gegebenenfalls durch ein Halogenatom oder eine Hydroxyl- oder Cyangruppe substituierte Alkyl-, Cycloalkyl-, Alkenyl-, Cycloalkenyl- oder Aralkylgruppe stehen, mit der Massgabe, dass $R^2$ auch ein Wasserstoffatom bedeuten kann, oder $R^2$ und $R^3$ zusammen mit dem daran gebundenen Stickstoffatom einen heterocyclischen Ring mit 3 bis 5 Kohlenstoffatomen und gegebenenfalls einem Sauerstoffatom im Ring bilden, $R^4$ $-NH_2$, $-NO_2$, —Cl, —Br oder Alkyl mit 1 bis 10 Kohlenstoffatomen darstellt und p null, 1 oder 2 ist, bestehen.

2. Massen nach Anspruch 1, dadurch gekennzeichnet, dass $R^2$ und $R^3$ je für eine Alkylgruppe mit 1 bis 6 Kohlenstoffatomen, eine Hydroxyalkylgruppe mit 2 bis 4 Kohlenstoffatomen, eine Cycloalkylgruppe mit 3 bis 7 Kohlenstoffatomen, eine Alkenylgruppe mit 2 bis 4 Kohlenstoffatomen oder eine Aralkylgruppe mit 7 bis 9 Kohlenstoffatomen stehen.

3. Massen nach Anspruch 2, dadurch gekennzeichnet, dass $R^2$ und $R^3$ beide für eine Methylgruppe oder $R^2$ für eine Methylgruppe und $R^3$ für eine 2-Hydroxyäthylgruppe stehen.

4. Massen nach einem der vorhergehenden Ansprüche, dadurch gekennzeichnet, dass p null ist, oder 1, wobei $R^4$ dann $-NO_2$, —Cl oder —Br bedeutet, oder 2, wobei $R^4$ dann jeweils eine Methylgruppe bedeutet.

5. Massen nach einem der Ansprüche 1 bis 4, dadurch gekennzeichnet, dass sie ferner (c) eine relativ geringe Gewichtsmenge, bezogen auf das Gewicht des Harnstoffs der Formel V, eines unter Dicyandiamid, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärtungsbeschleunigers enthalten, wobei (b) mit (c) zusammen eine heisshärtende Menge für (a) ausmachen.

6. Massen nach einem der Ansprüche 1 bis 4, dadurch gekennzeichnet, dass sie ferner (d) eine relativ grosse Gewichtsmenge, bezogen auf das Gewicht des Harnstoffs der Formel V, eines unter Dicyandiamid, Carbonsäurehydraziden, Succinimid, Cyanacetamid, 1-Cyan-3-niederalkylguanidinen mit bis zu 3 Kohlenstoffatomen in der bzw. den Niederalkylgruppe(n), Imidazolen und Carbonsäuresalzen tertiärer Amine ausgewählten Heisshärters enthalten, wobei (d) mit (b) zusammen eine heisshärtende Menge für (a) ausmachen.

**Claims**

1. A heat-curable composition comprising
a) an epoxide resin and
b) a heat-curing amount of a urea of formula

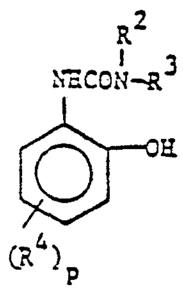

(V)

wherein $R_2$ and $R_3$ are each an alkyl, cycloalkyl, alkenyl, cycloalkenyl or aralkyl group which is unsubstituted or substituted by a halogen atom, a hydroxyl group or a cyano group, with the proviso that

$R^2$ may alternatively be a hydrogen atom, or $R^2$ and $R^3$ together with the nitrogen atom to which they are attached are a heterocyclic ring containing 3 to 5 carbon atoms, and optionally one oxygen atom, in the ring, $R^4$ is $-NH_2$, $-NO_2$, $-Cl$, $-Br$ or alkyl of 1 to 10 carbon atoms, and p is zero, 1 or 2.

2. A composition according to claim 1, wherein each of $R^2$ and $R^3$ is an alkyl group of 1 to 6 carbon atoms, a hydroxyalkyl group of 2 to 4 carbon atoms, a cycloalkyl group of 3 to 7 carbon atoms, an alkenyl group of 2 to 4 carbon atoms or an aralkyl group of 7 to 9 carbon atoms.

3. A composition according to claim 2, wherein each of $R^2$ and $R^3$ is a methyl group, or $R^2$ is a methyl group and $R^3$ is a 2-hydroxyethyl group.

4. A composition according to any one of the preceding claims, wherein p is zero, or 1, in which case $R^4$ is $-NO_2$, $-Cl$, or $-Br$, or p is 2, in which case each $R^4$ is a methyl group.

5. A composition according to any one of claims 1 to 4 which further contains (c) a relatively small amount by weight, based on the weight of the urea of formula V, of an accelerator for the heat-curing selected from dicyandiamide, carboxilic acid hydrazides, succinimide, cyanoacetamide, 1-cyano-3-$C_1$-$C_3$-alkylguanidines, imidazoles and salts of carboxylic acids with tertiary amines, (b) and (c) together constituting a heat-curing amount for (a).

6. A composition according to any one of claims 1 to 4 which further contains (d) a relatively large amount by weight, based on the weight of the urea of formula V, of a heat-curing agent selected from dicyandiamide, carboxylic acid hydrazides, succinimide, cyanoacetamide, 1-cyano-3-$C_1$-$C_3$ alkylguanidines, imidazoles and salts of carboxylic acids with tertiary amines, (d) and (b) together constituting a heat-curing amount for (a).

**Revendications**

1. Matières thermodurcissables caractérisées en ce qu'elles sont constituées par

a) une résine époxydique et

b) une quantité thermodurcissante d'une urée répondant à la formule V

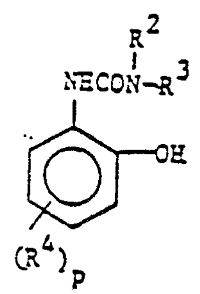

(V)

dans laquelle $R^2$ et $R^3$ représentent chacun un radical alkyle, cycloalkyle, alcényle, cycloalcényle ou aralkyle, éventuellement porteur d'un atome d'halogène ou d'un radical hydroxy ou cyano, avec la condition que $R^2$ puisse également représenter un atome d'hydrogène, ou $R^2$ et $R^3$ forment ensemble et avec l'atome d'azote auquel ils sont liés (voir la formule) un noyau hétérocyclique contenant, dans son cycle, de 3 à 5 atomes de carbone et éventuellement un atome d'oxygène, $R^4$ représente $-NH_2$, $-NO_2$, $-Cl$, $-Br$ ou un radical alkyle contenant de 1 à 10 atomes de carbone, et p représente un nombre égal à 0, à 1 ou à 2.

2. Matières selon la revendication 1 caractérisées en ce que $R^2$ et $R^3$ représentent chacun un radical alkyle contenant de 1 à 6 atomes de carbone, un radical hydroxyalkyle contenant de 2 à 4 atomes de carbone, un radical cyclo-alkyle contenant de 3 à 7 atomes de carbone, un radical alcényle contenant de 2 à 4 atomes de carbone ou un radical aralkyle contenant de 7 à 9 atomes de carbone.

3. Matières selon la revendication 2 caractérisées en ce que $R^2$ et $R^3$ représentent l'un et l'autre un radical méthyle, ou $R^2$ représente un radical méthyle et $R^3$ un radical hydroxy-2 éthyle.

4. Matières selon l'une quelconque des revendications précédentes, caractérisées en ce que p est égal à 0, ou p est égal à 1, auquel cas $R^4$ représente $-NO_2$, $-Cl$ ou $-Br$, ou p est égal à 2, auquel cas les $R^3$ représentent chacun un radical méthyle.

5. Matières selon l'une quelconque des revendications 1 à 4, caractérisées en ce qu'elles contiennent en outre (c) une quantité en poids relativement faible, par rapport au poids de l'urée de formule V, d'un accélérateur de thermodurcissement pris dans l'ensemble constitué par la cyanoguanidine, des hydrazides d'acides carboxyliques, le succinimide, le cyanacétamide, des cyano-1 (alkyl inférieur)-3 guanidines dont le ou les radicaux alkyles inférieurs contiennent chacun au plus 3 atomes de carbone, des imidazoles et des sels formés par des acides carboxyliques avec des amines tertiaires, la quantité totale de (b) et (c) devant être suffisante pour avoir un effet thermodurcissant sur (a).

6. Matières selon l'une quelconque des revendications 1 à 4, caractérisées en ce qu'elles contiennent en outre (d) une quantité en poids relativement grande, par rapport au poids de l'urée de formule V, d'un

thermodurcisseur choisi dans l'ensemble constitué par la cyanoguanidine, des hydrazides d'acides carboxyliques, le succinimide, le cyanacétamide, des cyano-1 (alkyl inférieur)-3 guanidines dont le ou les alkyles inférieurs contiennent au maximum 3 atomes de carbone, des imidazoles et des sels formés par des acides carboxyliques avec des amines tertiaires, la quantité totale de (d) et (b) étant suffisante pour avoir un effet thermodurcissant sur (a).